# EUROPEAN PATENT APPLICATION

(11) **EP 4 122 437 A1**
(43) Date of publication of application: **25.01.2023**
(21) Application number: 21186743.7
(22) Date of filing: 20.07.2021
(51) Int. Cl.: A61G 3/06, B60P 1/43

(54) **ADJUSTABLE AUTOMOBILE CABIN FLOOR, WHEELCHAIR ACCESS SYSTEM, AND AUTOMOBILE**

(71) Applicant: API CZ s.r.o., 391 76 Slapy (CZ)
(72) Inventor: Bartos, Miroslav, 39001 Tábor (CZ)
(74) Representative: Schmid, Nils T.F.

(57) **Abstract**

An adjustable automobile cabin floor (1), preferably for arrangement in a pan (107) in a door area of an automobile, in particular a rear door area of automobile, the adjustable automobile cabin floor (1) comprising a floor plate (3) for carrying a wheelchair, at least one joint (31) for attaching the floor plate (3) to the automobile chassis (105) such that the floor plate (3) is moveable between a lowered loading position and at least one, preferably horizontal, lifted travel position, at least one bearing (5) attachable to the automobile chassis (5) below the floor plate, and a lifting device for elevating and/or lowering the floor plate, such as a pivotable lever (7), supported by the bearing (5), is provided with a slider (9) translationally moveable along the floor plate (3), the slider (9) being interposed between the lifting device and the floor plate (3).

## Description

The present invention relates to an adjustable automobile cabin floor, preferably for arrangement in a pan in a door area of a automobile, in particular a rear door area of automobile. The invention also relates to a wheelchair access system. Furthermore, the invention relates to an automobile.

In order to make motor vehicles, especially compact cars or off-road vehicles, suitable for wheelchair users, the OEM-side-mounted vehicle floor has so far been removed to the extent that essentially only the vehicle body, including the vehicle body floor and vehicle body side parts, remains. A separately produced vehicle floor (also known as pan) is individually adapted to the available rear cargo space and, if necessary, to the passenger area part in front of the cargo space, is then mounted on the vehicle body. In comparison to the OEM-sided vehicle floor, the replacement floor is designed in such a way that considerably more space is available, especially in the vertical direction, so that even a wheelchair user can sit upright on the wheelchair in the vehicle interior and is safely accommodated. Usually, vehicle ramps are attached to the exchange floor in such a way that they can still be folded out of the vehicle so that the wheelchair user can easily enter and leave the vehicle. A foldable ramp allowing the entry of invalid wheelchars or electric scooters into an automobile is known from EP 2 293 755 B1. The foldable ramp includes a ramp that may unfold from a vertical transport position into an entry position out off the vehicle to allow wheelchair access to the pan in the rear door area of the automobile. The pan floor surface is usually arranged in a slope so as to leave room below the pan for the rear axis suspension. This ramp enjoys great popularity. However, some wheelchair passengers have expressed that they experience discomfort when riding in an inclided travel position due to the slope of the pan floor surface.

US 2018/0127034 A1 describes an attempt to provide a generally flat floor surface in the vicinity of the rear door of an automobile provided with a ramp for wheelchair access. To this end, a specifically designed suspension adapter is envisioned to make room for a pan with a lowered and substantially horizontal floor surface. While the approach is technically feasible, the severity of interference with the vehicle chassis requires excessive efforts to achieve compliance with regulatory requirements in order for vehicles equipped with such an adapter system to obtain series approval or even just individual approval.

GB 2 415 179 A describes another wheelchair access system comprising a moveable floor and a ramp 100 attached thereto via a hinge. The moveable floor can be arranged in a horizontal travel position or pivoted down together with the ramp into an entry position. Below the floor, a large pan is provided. The pan houses a compressor and air bags or a piston actuator with a toggle for lifting the floor up and down. The actuator components require a large pan volume which is usually not available in small and medium sized automobiles.

It is on object of the present invention to overcome the disadvantages of the state of the art, in particular to provide an adjustable automobile cabin floor and/or wheelchair access system which can be accommodated even within small and medium sized automobiles without inverfering with the vehicle chassis.

This object is solved by the subject matter of the independent claims.

Accordingly, an adjustable automobile cabin floor is provided. The adjustable automobile cabin floor is preferably provided for arrangement in a door area of an automobile, in particular a rear door area of an automobile. In particular, the adjustable automobile cabin floor is provided for arrangement in a pan. A pan designates a vehicle floor, which may be produced separately, and which may comprise metal, in particular steel, and/or a polymer material, such as a fiber reinforced polymer material. The pan is preferably adapted to the available rear cargo space of the automobile and/or to the passenger area part in front of the cargo space. the pan is preferably mounted to the vehicle body or chassis.

The adjustable automobile cabin floor comprises a floor plate for carrying a wheelchair. That is, the floor plate is adapted to serve as a basis on which a wheelchair in its assembled operating condition may be situated. Preferably, the floor plate is adapted to serve as a basis on which a wheelchair in which a passenger sits. It shall be clear that the floor plate may be designed as a singular platform with a plane surface on which the wheelchair wheels may move, or, alternatively comprise two or more rails, preferably rigidly connected to one another, for carrying the right or left wheelchair wheels. The floor plate may optionally be provided with one or more **fastening means** for securing and/or rigidly attaching a wheelchair to the plate. Additionally, the floor plate may preferably be provided with **vertically extending structural support ribs** configured to increase the rigidity of the adjustable automobile cabin floor against deformation, such as bending deformation or torsional deformation.

The adjustable automobile cabin floor further comprises at least one joint for attaching the floor plate to the automobile chassis such that the floor plate is movable between a lowered loading position and at least one, preferably horizontal, lifted travel position. The joint may be configured to firmly attach the floor plate to the automobile chassis in a pivotable manner. In a preferred embodiment, the joint may be realized as a hinge link, around which the floor plate may perform a generally rotational pivoting movement with regard to the chassis. It may be preferred that the floor plate in its lowered loading position is arranged in an inclined plane, preferably sloping downwards towards the outside of the vehicle, in particular with an angle of inclination of at least 5°, preferably at least 10°, and/or no more than 45°, preferably no more than 30°, downwards with regard to a horizontal plane. the lifted travel position arranges the floor plate preferably in an essentially horizontal plane, in particular having an orientation with an angle of less than 10°, preferably less than 5°, more preferably less than 2°, with regard to a horizontal orientation. The "horizontal" orientation may be defined in accordance with the generally horizontal layout of the automobile, preferably the passenger floor thereof, in particular when arranged on a level surface with no inclination.

Furthermore, the adjustable automobile cabin floor comprises at least one bearing attachable to the automobile chassis, in particular the pan, preferably in the area of the rearward end of the pan, below the floor plate, and a lifting device for elevating and/or lowering the floor plate, wherein said lifting device is supported by the bearing. In a preferred embodiment, the bearing comprises at least one base support, such as a base bracket. Generally speaking, the lifting device may be realized through any means capable of and configured to modify the elevation of the floor plate with regard to the automobile chassis, in particular the pan. The lifting device may be realized as a pivotable lever. The bearing is preferably distinct and/or separate from the joint. The lifting device, in particular the pivotable lever, is preferably attached to the bearing and more preferably not attached, i.e. not connected directly, to the joint, nor part thereof.

According to the invention, the adjustable automobile cabin floor comprises a slider translationally movable along the floor plate, the slider being interposed between the lifting device and the floor plate. In particular, the slider couples the floor plate kinematically to the lifting device. The slider may be attached to the lifting device and/or to the floor plate. It may be preferred that the slider is connected to the floor plate such that a relative translational movement of the slider with respect to the floor plate is admitted. The slider may be connected to the floor plate such that rotary relative motion of the slider with respect to the floor plate is prohibited, in particular around the longitudinal horizontal axis, a lateral horizontal axis and/or a vertical axis. It may be preferred that the slider is attached to the lifting device such that the lift device may perform a vertical relative motion with respect to the slider, wherein in particular the slider is movably attached to the lifting device such that the lift device may perform a relative rotary motion with respect to the slider with respect to a lateral horizontal axis. It may be preferred that the lifting device is prevented from performing a relative rotary motion with respect to the slider around the longitudinal horizontal axis. The attachment of the slider to the other component(s) may be configured such that translational movement of the slider in the lateral direction is prohibited. In one exemplary embodiment, the slider is only translationally movable along the floor plate only in the longitudinal direction, and the lift device is realized as a lever pivotable only around the lateral horizontal axis says to impart a rotary motion about said lateral horizontal axis corresponding to a simultaneous vertical movement of the lever. It shall be clear that the term "longitudinal" as used herein may refer to the primary/backboard direction of movement of the automobile. The term "lateral" as used herein may refer to the general orientation of the automobile wheel axis crosswise, in particular perpendicular, to the longitudinal direction.

It has been shown that through the use of a slider connecting the lifting device to the floor plate, a particularly space saving arrangement may be achieved, thereby allowing an adjustable automobile cabin floor to be used for the first time in small and medium-sized automobiles, such as for example compact cars, hatchbacks, stationwagons, minivans, microvans and SUVs. Such small and medium-sized cars may in particular refer to cars of Euro Car Segments A-E, J, and M (A: mini cars; B: small cars; C: medium cars; D: large cars; E: executive cars; M-multi purpose cars (in particular small, mid sized and large, preferably excluding large passenger vans and light commercial vehicles), J: sport utility cars)

According to an embodiment of the invention, the lifting device is a lever connected at its first end to the bearing and at its second end, in particular opposite the first end, to the floor plate. The lifting device may, at its first end, be attached to the bearing through a hinging connection. The lifting device, may, in particular at its second end, be connected to the floor plate through a hinging attachment to the slider.

According to another embodiment of the invention, which may be combined with the aforementioned one, the slider is connected to the lifting device and to the floor plate, wherein the slider is translationally movable, in particular parallel to the floor surface presented by the floor plate, with respect to the floor plate along a translational support rigidly attached to the floor plate. Slider is configured to carry the lifting device, in particular the second end of the lever, a long, thereby urging the lifting device to move, in particular the letter to pivot, preferably around a hinging connection to the bearing, up or down for defining an elevation of the floor plate. The slider and the lifting device, in particular the lever, are preferably kinematically coupled in such a way that a motion of the slider causes a corresponding motion of the lifting device and/or vice versa, at least for a predefined area of motion of the slider and/or of the lifting device. the slider may cooperate with the lifting device such that a large magnitude of lifting device can effectively be transferred into change of elevation of the floor plate while maintaining a compact building space.

In one embodiment of the invention, the lifting device has a liftoff configuration in which the floor plate is supported by the bearing in a rolling and/or sliding manner. The lifting device furthermore has a stilt configuration, in which the floor plate is supported by the bearing through the lifting device, in particular the lever. It may be preferred that in the liftoff configuration, the floor plate is supported directly by the bearing rather than indirectly through the lever. The adjustable automobile cabin floor may be configured such that the lifting device is in its stilt configuration when the floor plate is elevated to its travel position and/or such that the lifting device is in its liftoff configuration when the floor plate is lowered to its, preferably inclined, loading position. The lifting device may be configured to switch from the liftoff configuration to the stilt configuration during the movement of the floor plate from the loading position to the travel position, and vice versa.

According to a further development of the invention, the lifting device, in particular the lever, is connected to the slider through a sliding engagement and/or to the bearing through sliding engagement. The sliding engagement provides a predetermined range of translational freedom, such that in the liftoff configuration, the slider does essentially not forcibly engage the lifting device. It may be preferred that the movability of the lifting device with respect to the slider in the translational direction thereof defines the liftoff configuration of the lifting device. In the liftoff configuration, clearance may be present in the translational direction of movement of the slider between the slider and the lifting device. This allows for a particularly compact design.

In a further development of the invention which may be combined with the previous one, the slider and the bearing are provided with a sliding and/or rolling surface cooperating with the slider and/or roller counterpart. Preferably, the sliding and/or rolling surface is formed on the bearing. The slider and/or roller counterpart is preferably formed on the slider. The cooperating (sliding and/or rolling) surface and (slider and/or roller) counterpart are configured to support the floor plate in the liftoff configuration. Additionally, they may be configured to urge a relative vertical motion of the floor plate with respect to the bearing dependent on a sliding motion of the slider along the translational direction. It may be particularly preferred, that the cooperating surface and counterpart are configured to urge a relative vertical motion of the floor plate with respect to the bearing corresponding to translational movement of the slider in the slider's clearance with respect to the lifting device.

In one embodiment of an adjustable automobile cabin floor, the slider is attached to an actuator connector, in particular a pulley, for connecting the adjustable automobile cabin floor to an actuator. The actuator may for example be an electromotor with a cable pull. The actuator connector is mounted in a sliding bearing, movable only translationally and/or configured for absorbing lateral loads, in particular caused by the actuator. The actuator connector is in particular to liberate the slider from any forces acting lateral with respect to the translational direction of movement of the slider. The sliding bearing may in particular be rigidly attached to the floor plate.

In a further development of the invention, the slider is provided with the forward projecting drawbar rigidly attaching the actuator connector to the slider. In particular, the shape of the drawbar is flat, and the drama may preferably be shaped flat as a sheet or flat metal. Alternatively or additionally, the drawbar lies plane against a bottom surface of the floor plate opposite to the floor surface. Using a drawbar allows to separate the connection to the actuator structurally from the slider, thereby allowing to use available space more efficiently, thus allowing for a particularly flat kinematical structure allowing for a particularly large range of motion of the floor plate within the tight space constrictions of the automobile chassis, in particular the floor pan.

In yet a further development of the invention, the actuator connector comprises a pulley mounted to the connector, in particular to the drawbar. The pulley has a vertically oriented axis of rotation. Thus, the pulley disk body may be arranged in a flat, spatially parallel arrangement with the bottom surface of the floor plate and/or in close proximity to the floor plate so as to minimize the space consumption of the connector.

According to one embodiment of the adjustable automobile cabin floor, the floor plate is configured to be held in a multitude of intermediate positions between the lowered position and the travel position. The floor plate may be held at several distinctly predetermined intermediate positions between the lowered position in the travel position. Alternatively, the adjustable automobile cabin floor is configured such that the floor plate may be held in a stable manner in any arbitrarily selected intermediate position along a continuous path between the lowered position and the travel position. This allows for the wheelchair-bound passenger to select a position at most comfortable for them.

The invention also relates to a wheelchair access system for an automobile, in particular for attachment to a rear door area of the automobile, comprising an adjustable automobile cabin floor, in particular the adjustable automobile cabin floor mentioned above, and a ramp. The adjustable automobile cabin floor is movable between a, particularly lowered, loading position and a, particularly lifted, travel position. The audjustable automobile cabin floor may be provided with a kinematic structure moveably coupling a platform member, such as a floor plate, to the automobile chassis. The ramp may be positioned in an inclined entry position. Additionally, the ramp may be positioned in at least one of a transport position, particularly of vertical transport position, and a passive position, in particular a horizontal position, folded into the automobile. The ramp may in particular be provided with a joint structure moveably coupling the ramp to the automobile chassis. The ramp and the adjustable automobile cabin floor maybe adapted to one another such that the ramp may, in its passive horizontal position, rest on top of the floor surface of the floor plate arranged horizontally in its travel position. Accordingly, the ramp is mounted to the autumn about chassis independently of the adjustable automobile cabin floor. Additionally or alternatively, the ramp may be mounted to the autumn about chassis movable independently of the adjustable automobile cabin floor. The kinematic structure of the cabin floor is preferably moveable independent of the joint structure of the ramp. According to one preferred embodiment, the ramp is attached with a hinged connection, preferably a hinged connection such as described in EP 2 293 755 B1, WO 2019 214 873 A1, EP 3 400 923 A1, and EP 3 400 924 A1, all of which are hereby incorporated into the present disclosure in their entirety, directly to the automobile chassis, such that the ramp is movable with respect to the chassis regardless of the current position and/or movement of the adjustable automobile cabin floor. It is preferred, that the current position and/or movement of the adjustable automobile cabin floor has no influence on the current position and/or movement of the ramp. In particular, it may be preferable that an adjustable automobile cabin floor can be positioned or moved anywhere between its lowered loading position and its lifted travel position without affecting the ramp.

By rendering the adjustable automobile cabin floor independent of the ramp, it has been shown that, contrary to commonplace assumptions, it is possible to use less space for larger magnitude of motion for at least one, preferably both, of the ramp and the adjustable automobile cabin floor. This is because, as it turned out, the joints attaching the movable cabin floor and the ramp to the automobile chassis may be configured such that they require only little space whereas the large platform portions of the cabin floor and the ramp, require the same large amount of space virtually regardless of the connection structure.

In a preferred embodiment of a wheelchair access system according to the invention, the ramp and the adjustable automobile cabin floor are configured such that the ramp in its inclined entry position corresponds to, particularly lies flush with, the adjustable automobile cabin floor in an inclined lowered loading position thereof, in some cases, it may be advantageous that the angle of inclination of the adjustable automobile cabin floor differs from a tilt angle of the ramp, wherein preferably the tilt angle of the ramp may be lower than the angle of inclination of the adjustable automobile cabin floor. the angle of the nation of the adjustable automobile cabin floor shall be understood to relate to the angle of inclination of the platform member thereof, in particular the floor plate.

The invention furthermore relates to an automobile comprising the adjustable automobile cabin floor as described above. Alternatively or additionally, the invention may also relate to an automobile comprising a wheelchair access system as described above.

In an embodiment of an automobile according to the invention, a pan is provided, arranged in a door area of the automobile, in particular in a rear door area of the automobile. The pan is rigidly attached to the chassis of the automobile, in particular may be considered as part of the automobile chassis. The adjustable automobile cabin floor is in this embodiment arranged within said pan. The pan is configured to receive the adjustable automobile cabin floor. The pan and the adjustable automobile cabin floor may be configured to one another such that the floor space provided by the pan is completely or mostly, in particular for at least 80%, more particularly at least 90%, most particularly at least 95%, covered by the adjustable automobile cabin floor.

In a further development of an automobile according to the invention, the pan comprises a countersink and the lifting device and/or the slider, in particular the translational support, are retractable into said countersink. In particular, the countersink is a receptacle protruding downwards from the pan. Additionally or alternatively, one of the sliding and/or rolling surface and the slider and/or roller counterpart is formed on the bearing and arranged in the countersink and the other one thereof is retractable into the countersink. It may be preferred that the countersink is arranged in a rearward end section of the pan, in particular in the rearward half, preferably in the rearward third, more preferably in the rearward quarter of the pan. It shall be clear that the terms "forward" and "rearward" in the context of the present disclosure shall be understood to relate to the primary travel directions of the automobile.

According to another embodiment of the automobile according to the invention, which may be combined with the aforementioned embodiment and further development, the floor plate is contained within the pan, wherein in particular the adjustable automobile cabin floor is contained within the pan, preferably entirely. In particular the adjustable automobile cabin floor is free of a section, such as a ramp section, movable out of the automobile into an entry position. in other words, the wheelchair accessible automobile according to the invention comprises a ramp that may be moved out of the vehicle to allow for wheelchair passenger access and be retracted into the automobile, and an adjustable automobile cabin floor which always remains inside of the automobile.

Preferred embodiments are indicated in the subclaims.

However, it will be apparent to those skilled in the art having the benefit of the present disclosure that the various aspects of the invention claimed may be practiced in other examples that depart from these specific details. In certain instances, descriptions of well-known devices and methods are omitted so as not to obscure the description of the present invention with unnecessary detail.
- Figure 1: shows a schematic side view onto a wheelchair access system according to the invention in an entry configuration;
- Figure 2: shows a schematic side view of the wheelchair access system according to Fig. 1 in a travel configuration;
- Figure 3: shows a perspective view of the mechanical lift system of an adjustable automobile cabin floor according to the invention;
- Figure 4: shows an adjustable automobile cabin floor according to the invention comprising two lift systems as shown in Fig. 3.;
- Figure 5: shows a schematic side view of an adjustable automobile cabin floor with a floor plate in the lowered loading position and the lifting device in its liftoff configuration;
- Figure 6: shows a schematic side view of the adjustable automobile cabin floor as shown in Fig. 5 in a transition between the liftoff configuration and stilt configuration;
- Figure 7: shows a schematic side view of the adjustable automobile cabin floor of Fig. 5 with the floor plate in the lowered loading position and the lifting device in its stilt configuration; and
- Figure 8: shows a perspective sectional view of the wheelchar access system with the cabin flor in a travel position and the ramp in a passive position.
The following detailed description refers to the accompanying drawings. The same reference numbers may be used in different drawings to identify the same or similar elements. In the following description, for purposes of explanation and not limitation, specific details are set forth such as particular structures, functionality, etc. in order to provide a thorough understanding of the various aspects of the claimed invention.

An automobile cabin floor according to the invention is subsequently generally designated with reference numeral 1. A wheelchair axis system according to the invention is generally designated with reference numeral 101. A wheelchair access system 101 according to the invention is configured for use with an automobile 100 and comprises as its main constituents a movable ramp 103 and an adjustable automobile cabin floor 1. The automobile cabin floor 1 according to the invention comprises as its main constituents at least one floor plate 3 for carrying a wheelchair, at least one joint 31, at least one bearing 5, at least one lifting device, such as a lever 7, and a slider 9.

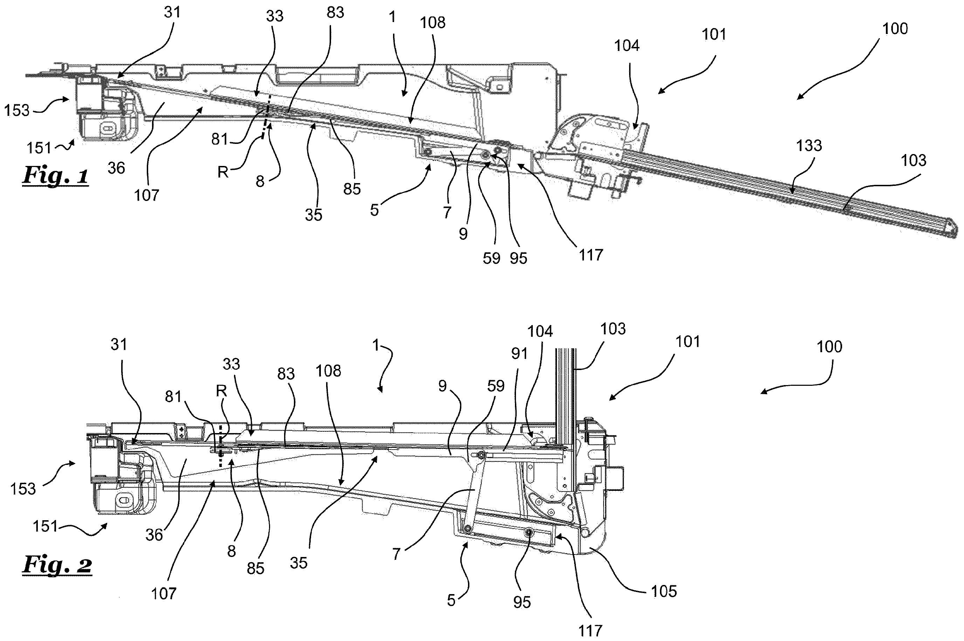

Figures 1 and 2 show sectional views through the rear section of an automobile 100 having a wheelchair access system 101 attached in the region of the rear door of the vehicle. Wheelchairs commonly have a width of approximately 50 cm and the length of approximately 107 cm. However, common small and medium-sized automobiles oftentimes do not have sufficient longitudinal space available behind the rear axle 153 or other structural members 155 of the automobile chassis 105. Any modifications to the rear axle 153 or other structural members 155 of an automobile chassis 105, however, in order to adapt them to the spatial requirement of the wheelchair-bound passenger, would render the serious certification of the automobile 100 void and require an individual certification of the automobile 100 be permitted into use. Thus, the wheelchair axis system 101 and the adjustable automobile cabin floor 1 according to the invention are configured such that the rear axle 153 and/or other structural members 155 of the automobile chassis 105 may remain unmodified 1, nevertheless providing a wheelchair-bound passenger with sufficient room to enter the automobile 100

Figure 1 shows the wheelchair access system 101 in an exemplary entry configuration, wherein the ramp 103 is arranged in an inclined entry position and wherein the adjustable automobile cabin floor 1 is arranged in a loading position. As shown in figure 1, both the ramp 103 and the adjustable automobile cabin floor 1 have a respective platform member providing a substantially even surface. The platform member of the ramp 103 provides a ramp floor surface 133 and the platform member of the adjustable automobile cabin floor 1 provides a floor surface 33 which are flush with one another and arranged with the same angle of inclination towards a horizontal plane with respect to a laterally extending axis of rotation of approximately 10° to allow a wheelchair-bound passenger to enter the automobile 100 through the rear door thereof.

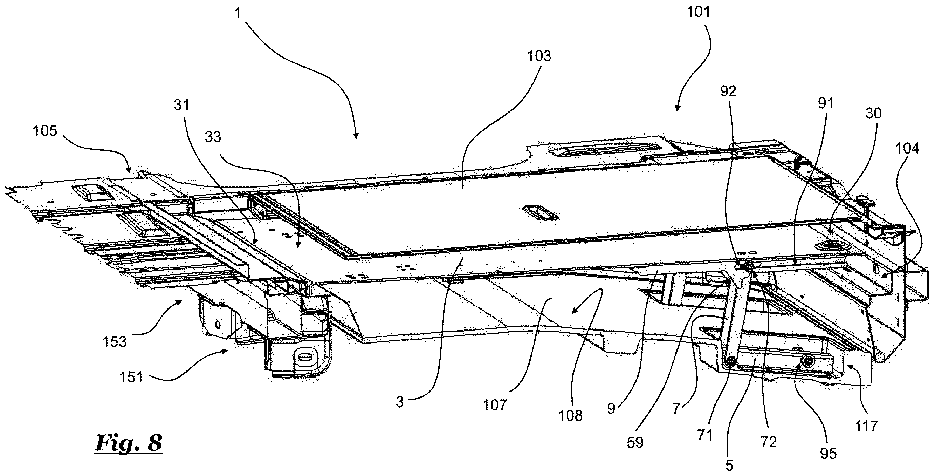

Figure 2 shows the wheelchair axis system 101 in an exemplary travel configuration, wherein the ramp 103 is arranged in a vertical transport position and wherein the adjustable automobile cabin floor 1 is arranged in a travel position. The travel position of the automobile cabin floor 1 is substantially horizontal. A wheelchair could be situated on top of the floor surface 33 of the adjustable automobile cabin floor in this position. Alternatively to the illustrated vertical transport position of the ramp 103 shown in Figure 2, the ramp could be arranged in a passive, in particular horizontal, position folded into the automobile such as shown in Figure 8. In such a passive position, the ramp 103 could be arranged to lie on top of the floor surface 33, for example in a face-to-face manner wherein the floor surface 33 and the ramp floor surface 133 about against one another. Such an alternative configuration might be helpful in cases where the automobile 100 shall not transport a wheelchair-bound passenger and in which simple access to the loading volume of the automobile 100 is desired.

The automobile 100 is preferably provided with a lowered pan 107 in the area of the rear door, wherein the pan 107 lies lower than the general floor level of the automobile 100. The pan 107 is arranged in the area of the rear suspension of the automobile 100. The schematic sectional illustrations show parts of the automobile axle 151 and other rigid frame members 153 forming part of the automobile chassis 105 which may remain unchanged by the indtroduction of the audjustable automobile cabin floor 1, ramp 103 and/or pan 107. The wheelchair axis system 101 as well as the adjustable automobile cabin floor 1 according to the invention, in spite of tight space constrictions which extend in contradiction to the introduction of a large wheelchair in the longitudinal direction through a rear door of the automobile 100, allow easy access for wheelchair-bound passengers while leaving the structural chassis components 105 unchanged. It is particularly advantageous that the adjustable automobile cabin floor 1 is configured such that it constantly remains within the automobile 100, in particular the pan 107.

In the embodiment of the wheelchair axis system 101 illustrated in figures 1 and 2, the ramp 103 is movably connected to the automobile chassis 105 independently of the attachment of the adjustable automobile cabin floor 1. The ramp 103 is attached to the automobile chassis 105 through a joint structure 131. The joint structure 131 allows the ramp 103 movability with respect to the armor chassis 105 in a rotational manner from the entry position illustrated in figure 1 to the vertical transport position illustrated in figure 2. Additionally, the joint structure 131 may allow the ramp 103 to be movable, preferably in a rotationally translational manner, from the vertical transport position position to a passive position (not shown). The movement of the ramp 103 is independent of the movement or position of the adjustable automobile cabin floor 1. The ramp 103 may be provided with one or more receptions 104 configured to receive a section of the the adjustable automobile cabin floor 1, in particular in the loading position, the travel position and/or an intermediate position thereof.

The adjustable automobile cabin floor 1 is movably connected to the automobile chassis 105 independently of the attachment of the ramp 103. The adjustable automobile cabin floor 1 is hingedly connected to the automobile chassis 105 through a joint 31. The adjustable automobile cabin floor 1 is further connected to the automobile chassis 105 with a lifting device which in the illustrated embodiments is realized as a lever 7. The joint 31 and the lifting device couple the floor plate 3 of the cabin floor 1 to the chassis 105 of the automobile 100 and manner movable between the lowered loading position illustrated in figure 1 to the lifted travel position shown in figure 2. The movement of the adjustable automobile cabin floor 1 is independent of the movement or position of the ramp 103.

The pan 107 projects downward from a general cabin floor level of the automobile 100 in the illustrated embodiment, the pan 107 is provided with a countersink 117 projecting even further downward than the overall bottom surface 108 of the pan 107. The countersink 117 is arranged in the rearmost quarter section of the pan 107. The bearing 5 attaching the lever 7 or other lifting device to the automobile chassis 105 is arranged within the countersink 117. A roller counterpart 95 is rotatably attached to the bearing 5 in a stationary position with respect to the bearing 5 and also position within the countersink 117. The lever 7 is pivotably connected to the bearing 5. To this end, the first end 71 of the lever 7 hingedly attached to the bearing 5 near the the respective forward end. The bearing 5 and counterpart 95 as well as the hinge for attaching to the first end 71 of the lever 7 are arranged within the countersink 117 below the general bottom level of the pan 107. The lever 7 is configured such that it may retract into the countersink 117. The second end 72 of the lever 7 opposite to the first end 71 is connected to a slider 9 which may also be retracted into the countersink 170, together with a translational sliding support 91 coupled the slider 9. The slider 9 may further be provided with a rolling surface 59 configured to cooperate with the roller counterpart 95 which may also be configured to be retractable into the countersink 117. The countersink 117 is preferably configured to receive the lifting device, in particular in a manner such that a retracted lifting device is entirely contained within the countersink 117 and most preferably such that the lifting device does not project into the flow pan 107. The countersink 117 and the corresponding configuration of the bearing 5 as well as possibly the lever 7 and/or the slider 9 allow for a particularly shallow overall design of the the adjustable automobile cabin floor 1 which allows the floor plate 3 to be brought into a very close proximity of the bottom floor 108 of the pan 107, thereby making use of the entire size thereof in order to maximize the possible pivoting angle between the lifted travel position and the lowered loading position.

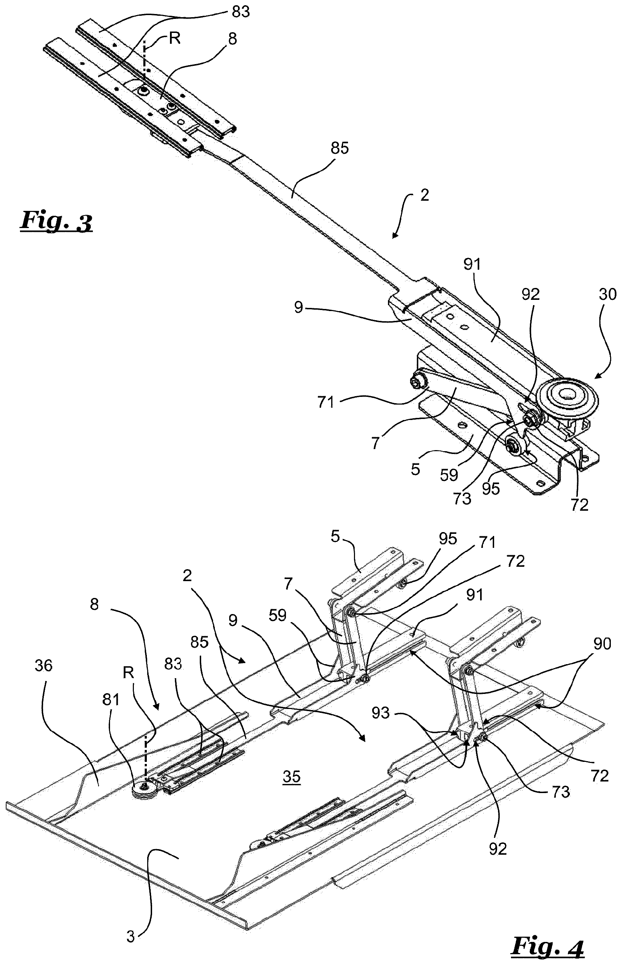

The adjustable automobile cabin floor 1 according to the invention, which in the illustrated embodiments forms part of the wheelchair axis system 101 according to the invention, is described in further detail hereinbelow, in particular with reference to figures 4 showing the adjustable automobile cabin floor 1 and to figures 3 and figures 5 - 7 which show embodiments of the actuation kinematics 1 of the cabin floor 1.

In order to securely hold a wheelchair of a wheelchair-bound passenger, the adjustable automobile cabin floor 1 is preferably provided with at least one fastening means 30 configured to be rigidly attachable to a wheelchair. In the illustrated embodiment, the fastening means 30 is rigidly connected to the pneumatic structure 2, in particular to a member acting also as the translational support 91 for the slider 9. In order to provide the floor plate 3 with additional structural rigidity, one or more vertically extending structural support ribs 36 may be provided on the bottom surface 35 of the floor plate 3.

Figure 3 shows the kinematic structure 2 coupling the adjustable automobile cabin floor 1 to the chassis 105. As shown in figure 4, the floor plate 3 forming the platform member of the adjustable automobile cabin floor 1 is provided with 2 parallel he extending an otherwise identical kinematic structures 2. In the preferred embodiment shown in the enclosed figures, the kinematic structure 2 comprises a joint 31 (not shown in detail) for attaching the floor plate 3 to the automobile chassis 105, and a lifting member for setting the elevation of the floor plate 3, the lifting member being realized as a lever 7 attached with a first end 71 thereof to a bearing 5 and with a second end thereof to a slider 9 operatively coupled to a translational support 91.

As shown in figures 1 and 2, the joint 31 may be arranged vertically above the axle 151 and/or another structural component 153 and connected thereto. The joint 31 is configured to define a laterally extending horizontal pivot axis of the adjustable automobile cabin floor 1, in particular of the floor plate 3 forming its platform member. The floor plate 3 rests on top of the kinematic structure 2. The floor plate 3 is rigidly attached to the vehicle chassis 105 through the kinematic structure 2, that is, the kinematic structure 2 is configured to support the weight of the platform member as well as a wheelchair, wheelchair-bound passenger or other load resting on top of the floor plate 3. The kinematic structure 2 is firmly attached to the vehicle chassis 105. The kinematic structure 2 connects the floor plate 3 of the adjustable automobile cabin floor 1 to the vehicle chassis 105 in the movable manner as described herein.

An actuator, such as an electromechanical actuator, a hydraulic actuator, a pneumatic actuator or the like (not shown) may be provided to the automobile 100 to provide an actuator force for bringing the adjustable automobile cabin floor 1 into a desired position. According to the illustrated preferred embodiment, the actuator may be an electromechanical actuator, such as a stepper motor, connected to an actuator connector 8 of the cabin floor 1, in particular the kinematic structure 2.

The adjustable automobile cabin floor 1, in particular the kinematic structure 2, may be provided with a pulley 81 configured to cooperate with the cable pull driven by the actuator. The pulley 81 may be connected to the cabin floor 3 with a generally vertically extending axis of rotation R such that a disk of the pulley 81 ask tends in a generally horizontal manner or at least spatially parallel to the cabin floor 3 in order to allow for shallow design. To this end, the connector 8 is provided to the forward projecting end of a drawbar 85 rigidly connected to the slider 9. The slider 9 and the drawbar 85 are preferably formed as a singular, uniform component. A sliding bearing 83 may be provided to couple the connector 8 to the bottom surface 35 of the floor plate 3. The sliding bearing 83 is configured to allow the connector 8 to move translationally in the longitudinal direction of the automobile 100. The sliding bearing 83 is adapted to the connector 8 such that it receives any lateral forces acting on the connector 8, thereby relieving the slider 9 from such lateral forces.

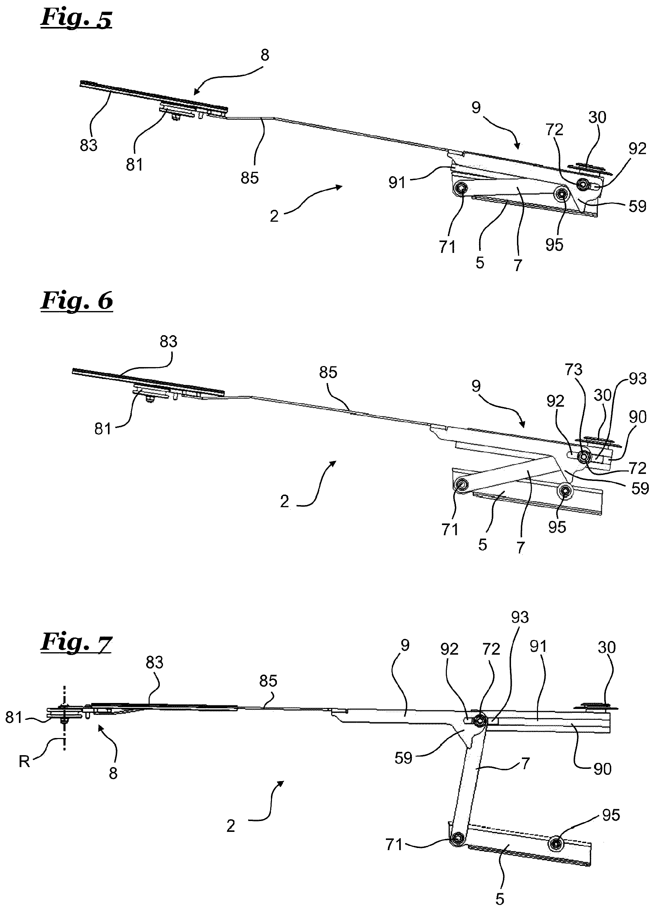

When the actuator drives the actuator connector 8, the movement of the actuator connector 8 is transferred to the slider 9, thereby causing the slider 9 to move. The movement of the slider 9 in the floor plate 3 attached thereto as well as the other components of the kinematic structure 2 will be described in further detail, referring to the figures 5 through 7.

Figure 7 shows floor plate 3 in the lowered loading position and the lifting device in its stilt configuration. In the stilt configuration, the weight of the floor plate 3 and anything on it, is transferred the bearings 5 through the lifting device, which is here shown to be a lever 7. Figure 5 shows the adjustable automobile cabin floor 1 with its floor plate 3 in the lowered loading position and the lifting device in a liftoff configuration thereof. In the liftoff configuration, the weight of the floor plate 3 and anything on it is transferred directly from the slider 9 to the bearing 5, thereby relieving the lifting device. For example in the illustrated embodiment, the lever 7 which acts as the lifting device, driven through a cable pull acting on the actuator connector 8, may be momentarily arranged in an unfavorable geometric position with regard to force transfer. The rolling surface 59 and the roller counterpart 95 cooperating with one anoher advantageously relieve the lever 7 of load during the liftoff configuration until the lever 7 reaches a more favorable positon. Such a configuration has been found to be very advantageous in order to balance contradicting demands on the one hand with respect to the loads desired to be lifted with an adjusteable automobile cabin floor 1 and on the other hand with respect to the tight special contraints in small and medium size automobiles. It shall be clear that part of the weight may be transferred from the floor plate 3 to the automobile chassis 105 also through the joint 31, in any position of the floor plate 3.

Figure 6 shows lifting device in a transition between the liftoff configuration and stilt configuration. As can be inferred from figures 5 and 6, during the liftoff configuration, the slider 9 is provided with a sliding and/or rolling surface 59 engaging a roller counterpart 95 rotatably attached to the bearing 5. During the movement of the adjustable automobile cabin floor 1 from the lowermost position shown in figure 5 to the transition position shown in figure 6, the load of the floor plate 3 is transferred through the rolling surface 59 of the slider 9 to the slider counterpart 95 of the bearing 5. The rolling surface 59 is formed as a generally plane surface with an inclined, downward projecting orientation. The bottom tip of the rolling surface 59 may rest on top of the bearing 5 in the loading position. As the slider 9 is urged to move forward by the actor (not shown), the engagement of the rolling surface 59 and the roller counterpart 95 imparts an upwards movement to the slider 9 and the floor plate 3 connected therewith.

Between the transition position shown in figure 6 and the travel position shown in figure 7, the load of the floor plate 3 is transferred from the slider 9 through the lever 7 into the bearing 5. As the slider 9 is moved further forward by the actuator, the slider 9 engages the second end 72 of the lever 7 which is forced to pivot about the first end of the lever 71 connected to the bearing 5, thereby imparting a further upwards movement to the slider 9 and the floor plate 3 connected therewith. In this stilt configuration, the surface 59 and the counterpart 95 do not engage.

The second end 72 of the lever 7 is provided with a pin 73 received within the translationally extending slot 92 in the slider 9. The slot 92 provides clearance between the lever 7 and the slider 9, allowing the slider 92 move translationally with respect to the lever 7 in the liftoff configuration. in the loading position of the floor plate 3, the pin 73 is arranged in the forward edge of the slot 92. Once the slider 9 reaches the transfer position, the pin 73 engages the rearward edge of the slot 92. The pin 73 remains at the rearward edge of the slot 92 as the lever 7 pivots about its first and 71 opposite to the second end 72 where the pin 73 is situated.

The slider 9 is coupled to the floor plate 3 in a translationally movable manner through the translational support 91. The translational support 91 is rigidly attached to the floor plate 3 and provided with guide tracks 90 cooperating with the dovetails of 93 the slider 9. The pin 73 may be rigidly attached to the dovetail 93. The slot 92 may be oriented in parallel with the guide track 90.

The features disclosed in the above description, the figures and the claims may be significant for the realization of the invention in its different embodiments individually as in any combination.

### REFERENCE SIGN LIST

- 1: adjustable automobile cabin floor
- 2: kinematic structure
- 3: floor plate
- 5: bearing
- 7: lever
- 8: actuator connector
- 9: slider
- 30: fastening means
- 31: joint
- 33: floor surface
- 35: bottom surface
- 36: vertically extending structural support ribs
- 59: sliding and/or rolling surface
- 71: first end
- 72: second end
- 73: pin
- 81: pulley
- 83: sliding bearing
- 85: drawbar
- 90: guide track
- 91: translational support
- 92: slot
- 93: dovetail
- 95: slider and/or roller counterpart
- 100: automobile
- 101: wheelchair access system
- 103: ramp
- 104: reception
- 105: chassis
- 107: pan
- 108: bottom surface
- 117: countersink
- 131: joint structure
- 133: ramp floor surface
- 151: automobile axle
- 153: rigid frame members

- R: axis of rotation

## Claims

1. Adjustable automobile cabin floor (1), preferably for arrangement in a pan (107) in a door area of an automobile, in particular a rear door area of automobile, the adjustable automobile cabin floor (1) comprising
a floor plate (3) for carrying a wheelchair,
at least one joint (31) for attaching the floor plate (3) to the automobile chassis (105) such that the floor plate (3) is moveable between a lowered loading position and at least one, preferably horizontal, lifted travel position,
at least one bearing (5) attachable to the automobile chassis (5) below the floor plate, and
a lifting device for elevating and/or lowering the floor plate, such as a pivotable lever (7), supported by the bearing (5),
**characterized by** a slider (9) translationally moveable along the floor plate (3), the slider (9) being interposed between the lifting device and the floor plate (3).

2. Adjustable automobile cabin floor (1) according to claim 1, **characterized in that** the lifting device is a lever (7) connected at its first end (71) to the bearing and at its second end (72), in particular opposite the first end (71), to the floor plate (3).

3. Adjustable automobile cabin floor (1) according to claim 1 or 2, **characterized in that** the slider (9) is connected to the lifting device and to the floor plate (3), the slider (9) being translationally moveable, in particular parallel to the floor surface (33) presented by the floor plate (3), with respect to the floor plate (3) along a translational support (91) rigidly attached to the floor plate (3), wherein the slider (9) is configured to carry the lifting device, in particular the second end (72) of the lever (7), along, thereby urging the lifting device to move, in particular the lever (7) to pivot, up or down for defining an elevation of the floor plate (3).

4. Adjustable automobile cabin floor (1) according to one of the preceding claims,
**characterized in that** the lifting device has a liftoff configuration, in which the floor plate (3) is supported by the bearing (5) in a rolling and/or sliding manner and wherein the lifting device has a stilt configuration, in which the floor plate (3) is supported by the bearing (5) through the lifting device, in particular the lever (7).

5. Adjustable automobile cabin floor (1) according to claim 4, c**haracterized** in that the lifting device, in particular the lever (7), is connected to slider (9) and/or to the bearing (5) through a sliding engagement (91) providing a predetermined range of translational freedom, such that in the liftoff configuration, the slider (9) does essentially not forcibly engage the lifting device.

6. Adjustable automobile cabin floor (1) according to claim 4 or 5, **characterized in that** the slider (9) and the bearing (5) are provided with a sliding and/or rolling surface (59), in particular formed on the bearing (5), cooperating with a slider and/or roller counterpart (95), in particular formed on the slider (9), configured to support the floor plate (3) in the liftoff configuration and to urge a relative vertical motion of the floor plate (3) with respect to the bearing (5) dependent on a sliding motion of the slider (9) along the translational direction.

7. Adjustable automobile cabin floor (1) according to one of the preceding claims,
**characterized in that** the slider (9) is attached to an actuator connector (8), in particular a pulley (81), for connecting the adjustable automobile cabin floor (3) to an actuator, in particular an electromotor with a cable pull, wherein the actuator connector (8) is mounted in a sliding bearing (83), in particular rigidly attached to the floor plate (3), moveable only translationally and/or configured for absorbing lateral loads, in particular caused by the actuator.

8. Adjustable automobile cabin floor (1) according to claim 7, **characterized in that** the slider (9) is provided with a forward projecting drawbar (85) rigidly attaching the actuator connector (8) to the slider (9), wherein in particular the drawbar (85) is shaped flat, in particular as a sheet or flat metal, and/or lies plane against a bottom surface (35) of the floor plate (3) in particular opposite to the floor surface (33).

9. Adjustable automobile cabin floor (1) according to claim 7 or 8, **characterized in that** the actuator connector (8) comprises a pulley (81) mounted to the connector (8), in particular the drawbar (85), with a vertically oriented axis of rotation (R).

10. Adjustable automobile cabin floor (1) according to one of the preceding claims,
**characterized in that** the floor plate (3) is configured be held in a multitude of intermediate positions between the lowered position and the travel position.

11. Wheelchair access system (101) for an automobile (100), in particular for attachment to a rear door area of the automobile (100), comprising an adjustable automobile cabin floor (1) moveable between a loading position and a travel position, in particular according to one of the preceding claims, and a ramp (103) moveable between a, particularly vertical, transport position and/or a passive, in particular horizontal, position folded into the automobile, and an inclined entry position, **cha racterized** in that
the ramp (103) is mounted to the automobile chassis (105) independently and/or moveable independently of the adjustable automobile cabin floor (1).

12. Wheelchair access system (101) according to claim 11, **characterized in that** the ramp (103) and the adjustable automobile cabin floor (1) are configured such that the ramp (103) in its inclined entry position corresponds to, in particular lies flush with, the adjustable automobile cabin floor (1) in inclined lowered loading position.

13. Automobile (100) comprising the adjustable automobile cabin floor (1) according to one of the claims 1 to 10 and/or a wheelchair access system according to claim 11 or 12.

14. Automobile (100) according to claim 13, **characterized in** by a pan (107) arranged in a door area of the automobile (100), in particular in a rear door area of the automobile (100), wherein the adjustable automobile cabin floor (1) is arranged in the pan (107).

15. Automobile according to claim 14, **characterized in that** the bearing (5) is arranged in a countersink (117) of the pan, wherein the lifting device and/or the slider (9), in particular the translational support (91), are retractable into the countersink (117), and/or wherein one of the sliding and/or rolling surface (59) and the slider and/or roller counterpart (95) is formed on the bearing (5) and arranged in the countersink (117) and the other one thereof is retractable into the countersink (117).

16. Automobile according to claim 14 or 15, **characterized in that** the floor plate (3) is contained within the pan (107), wherein in particular the adjustable automobile cabin floor (1) is contained within the pan, wherein in particular the adjustable automobile cabin floor (1) is free of a section moveable out of the automobile into an entry position.

## Amended claims

### Amended claims in accordance with Rule 137(2) EPC.

1. Adjustable automobile cabin floor (1) for arrangement in a pan (107) in a rear door area of automobile, the adjustable automobile cabin floor (1) comprising a floor plate (3) for carrying a wheelchair,
at least one joint (31) for attaching the floor plate (3) to the automobile chassis (105) such that the floor plate (3) is moveable between a lowered loading position and at least one lifted travel position,
at least one bearing (5) attachable to the automobile chassis (105) below the floor plate, and
a lifting device for elevating and/or lowering the floor plate, such as a pivotable lever (7), supported by the bearing (5),
**characterized by** a slider (9) which couples the floor plate (3) kinematically to the lifting device, wherein the slider (9) is translationally moveable along the floor plate (3), the slider (9) being interposed between the lifting device and the floor plate (3).

2. Adjustable automobile cabin floor (1) according to claim 1, **characterized in that** the lifting device is a lever (7) connected at its first end (71) to the bearing and at its second end (72) to the floor plate (3).

3. Adjustable automobile cabin floor (1) according to claim 1 or 2, **characterized in that** the slider (9) is connected to the lifting device and to the floor plate (3), the slider (9) being translationally moveable parallel to the floor surface (33) presented by the floor plate (3) with respect to the floor plate (3) along a translational support (91) rigidly attached to the floor plate (3), wherein the slider (9) is configured to carry the lifting device along, thereby urging the lifting device to move up or down for defining an elevation of the floor plate (3).

4. Adjustable automobile cabin floor (1) according to one of the preceding claims,
**characterized in that** the lifting device has a liftoff configuration, in which the floor plate (3) is supported by the bearing (5) in a rolling and/or sliding manner and wherein the lifting device has a stilt configuration, in which the floor plate (3) is supported by the bearing (5) through the lifting device.

5. Adjustable automobile cabin floor (1) according to claim 4, **characterized in that** in the liftoff configuration, the lifting device is connected to slider (9) and/or to the bearing (5) through a sliding engagement (91) providing a predetermined range of translational freedom, such that in the liftoff configuration, the slider (9) does essentially not forcibly engage the lifting device.

6. Adjustable automobile cabin floor (1) according to claim 4 or 5, **characterized in that** the slider (9) and the bearing (5) are provided with a sliding and/or rolling surface (59) cooperating with a slider and/or roller counterpart (95) configured to support the floor plate (3) in the liftoff configuration and to urge a relative vertical motion of the floor plate (3) with respect to the bearing (5) dependent on a sliding motion of the slider (9) along the translational direction.

7. Adjustable automobile cabin floor (1) according to one of the preceding claims,
**characterized in that** the slider (9) is attached to an actuator connector (8), in form of a pulley (81), for connecting the adjustable automobile cabin floor (3) to an electromotor with a cable pull wherein the actuator connector (8) is mounted in a sliding bearing (83) moveable only translationally and/or configured for absorbing lateral loads.

8. Adjustable automobile cabin floor (1) according to claim 7, **characterized in that** the slider (9) is provided with a forward projecting drawbar (85) rigidly attaching the actuator connector (8) to the slider (9), wherein the drawbar (85) is shaped flat and/or lies plane against a bottom surface (35) of the floor plate (3) opposite to the floor surface (33).

9. Adjustable automobile cabin floor (1) according to claim 7 or 8, **characterized in that** the actuator connector (8) comprises a pulley (81) mounted to the connector (8) with a vertically oriented axis of rotation (R).

10. Adjustable automobile cabin floor (1) according to one of the preceding claims,
**characterized in that** the floor plate (3) is configured be held in a multitude of intermediate positions between the lowered position and the travel position.

11. Wheelchair access system (101) for an automobile (100) for attachment to a rear door area of the automobile (100), comprising an adjustable automobile cabin floor (1) moveable between a loading position and a travel position, and a ramp (103) moveable between a transport position and/or a passive position folded into the automobile, and an inclined entry position, **characterized in that** the ramp (103) is mounted to the automobile chassis (105) independently and/or moveable independently of the adjustable automobile cabin floor (1).

12. Wheelchair access system (101) according to claim 11, **characterized in that** the ramp (103) and the adjustable automobile cabin floor (1) are configured such that the ramp (103) in its inclined entry position corresponds to the adjustable automobile cabin floor (1) in inclined lowered loading position.

13. Automobile (100) comprising the adjustable automobile cabin floor (1) according to one of the claims 1 to 10 and/or a wheelchair access system according to claim 11 or 12.

14. Automobile (100) according to claim 13, **characterized in** by a pan (107) arranged in a door area of the automobile (100) in a rear door area of the automobile (100) wherein the adjustable automobile cabin floor (1) is arranged in the pan (107).

15. Automobile according to claim 14, **characterized in that** the bearing (5) is arranged in a countersink (117) of the pan, wherein the lifting device and/or the slider (9)are retractable into the countersink (117), and/or wherein one of the sliding and/or rolling surface (59) and the slider and/or roller counterpart (95) is formed on the bearing (5) and arranged in the countersink (117) and the other one thereof is retractable into the countersink (117).

16. Automobile according to claim 14 or 15, **characterized in that** the floor plate (3) is contained within the pan (107).
